Europäisches Patentamt

(19) European Patent Office

Office européen des brevets

(11) Numéro de publication: **0 335 044**

**A1**

(12) # DEMANDE DE BREVET EUROPEEN

(21) Numéro de dépôt: 88400764.2

(51) Int. Cl.4: **C10B 53/02**

(22) Date de dépôt: 29.03.88

(43) Date de publication de la demande:
04.10.89 Bulletin 89/40

(84) Etats contractants désignés:
AT BE CH DE ES FR GB GR IT LI LU NL SE

(71) Demandeur: Devallet, André
7, rue Bayard
F-75008 Paris(FR)

(72) Inventeur: Devallet, André
7, rue Bayard
F-75008 Paris(FR)

(74) Mandataire: Faber, Jean-Paul
CABINET FABER 35, rue de Berne
F-75008 Paris(FR)

(54) Installation de fabrication de charbon de bois.

(57) Installation de fabrication de charbon de bois du type comprenant des fours (1) caractérisée en ce qu'elle comporte deux séries de fours (1) disposées sur deux lignes parallèles, une unité de craquage (15) insérée entre les deux lignes et comportant un collecteur supérieur (17) relié par des conduits (52) aux fours (1), et débouchant dans une enveloppe (16) de ladite unité de craquage et qui est divisée en plusieurs sections de combustion (25, 26 et 27) reliées à un conduit (39) s'ouvrant sur un conduit d'évacuation (40), sur le conduit (39) étant prévue une dérivation (41) reliée à un second collecteur (43) relié par des conduits (4) à la partie inférieure des fours (1), des moyens (5) étant prévus pour raccorder sélectivement chaque four (1) aux conduits (52) ou à un tuyau (57) des moyens (70-73) pour ouvrir et fermer sélectivement les conduits (4) des moyens (37) pour créer une circulation dans l'enveloppe (16) et des moyens (21) d'admission d'air comburant dans l'enveloppe (16).

FIG.5

## Installation de fabrication de charbon de bois

La présente invention à pour objet une installation de fabrication de charbon de bois.

La présente invention vise une installation dans laquelle on utilise des fours pour la carbonisation de bois et qui comportent à leurs parties supérieures un conduit d'évacuation des fumées et à leurs parties inférieures des moyens permettant l'injection dans lesdits fours d'un fluide de séchage.

On sait que, lors de la phase de carbonisation, il se dégage des vapeurs pyroligneuses, des goudrons, des brais, des aldéhydes, alcools, cétones, acides, hydrocarbures, phénols etc.. dont certains ont un pouvoir calorifique important, mais qui sont également polluants. Il est par conséquent souhaitable de ne pas rejeter dans l'atmosphère ces vapeurs pyroligneuses et d'essayer d'utiliser celles-ci compte tenu de leur pouvoir calorifique.

L'un des buts de la présente invention est, par conséquent, de réaliser une installation simple consommant très peu d'énergie et qui permet de produire du charbon de bois de très bonne qualité en évitant le dégagement de vapeurs polluantes.

L'installation, selon l'invention, est du type comprenant des fours avec à l'extrémité supérieure une évacuation des fumées et à l'extrémité inférieure un embout destiné à être relié à des moyens de séchage du bois à carboniser et est caractérisée en ce qu'elle comporte deux séries de fours disposées sur deux lignes parallèles, une unité de craquage insérée entre les deux lignes de fours et comportant un collecteur supérieur présentant de part et d'autre des séries de conduits destinés à être reliés chacun à la partie supérieure d'un four, ledit collecteur débouchant dans une enveloppe de ladite unité de craquage et qui est divisée en plusieurs section de combustion reliées à un conduit s'ouvrant sur un conduit d'évacuation, sur ledit conduit étant prévue une dérivation reliée à un second collecteur comportant deux séries de conduits destinés à être raccordés aux embouts de la partie inférieure des fours, des moyens pour raccorder sélectivement chaque four aux conduits du collecteur supérieur ou à un tuyau d'évacuation des vapeurs, des moyens pour ouvrir et fermer sélectivement les conduits raccordant le second collecteur à la partie inférieure des fours, des moyens pour créer une circulation dans l'enveloppe et des moyens d'admission d'air comburant dans l'enveloppe. Grâce à une telle installation, durant la phase de carbonisation, on récupère les vapeurs pyroligneuses qui sont brûlées dans l'unité de craquage de sorte qui ressort à l'extrémité du conduit des vapeurs sèches non polluantes, ces vapeurs sèches étant recyclées pour sécher le bois contenu dans des fours en attente, disposé dans l'installation, tandis que le surplus de vapeurs sèches non polluantes peut être récupéré pour constituer une énergie à très bon marché susceptible d'être utilisée à différentes fins, par exemple, le chauffage de serres, de bâtiments industriels, etc.. On peut également envisager de produire avec ces vapeurs sèches de l'électricité permettant de fournir le courant nécessaire à l'installation. Un autre avantage d'une telle installation est, que les fours en fonctionnement de carbonisation peuvent être placés à n'importe quel emplacement d'une ligne, de même que les fours dont le bois est destiné à être séché. Une telle installation permet de carboniser des essences de bois très différentes avec des granulométries quelconques.

Afin de faciliter l'évacuation des fours après leur carbonisation et leur remplacement par d'autres fours remplis de bois à carboniser, les fours sont mobiles et supportés par des roulettes.

Suivant encore une autre caractéristique, l'installation comporte un circuit de rails avec une voie principale desservant une aire de stockage du bois à carboniser, une plaque tournante pour desservir des voies correspondant aux différents emplacements des fours sur une ligne, une seconde plaque tournante pour desservir des voies correspondant aux différents emplacements de fours sur la seconde ligne, la voie principale formant une boucle fermée dont les deux extrémités s'ouvrent sur la seconde plaque tournante et sur laquelle sont réparties une aire de refroidissement des fours, une station d'ensachage et l'aire de stockage du bois à carboniser avec un tapis transporteur destiné à remplir lesdits fours. Ainsi, on réalise une installation très rationnelle qui permet la production des charbons de bois dans des conditions optimum.

Suivant une caractéristique constructive, l'unité de craquage comprend une première section pourvue d'un allumeur et dans laquelle arrive l'air comburant, cette section constituant une chambre de mélange et étant séparée de la section suivante par une paroi ajourée, la section suivant constituant une chambre de détente et étant raccordée à la troisième section par une paroi présentant une ouverture en forme de tronc de cône tandis que la troisième section est raccordée au conduit par un système de venturi avec un ventilateur. Ainsi, les vapeurs pyroligneuses sont, au début du fonctionnement de l'installation enflammées, puis l'allumeur est éteint et le système fonctionne de lui-même du fait du séchage préalable du bois, les vapeurs pyroligneuses étant dépourvues d'eau.

Afin de vérifier que la vapeur sèche qui s'échappe par le conduit à l'extrémité de l'enveloppe est parfaitement pure, le conduit comporte une sonde reliée à un analyseur de gaz déterminant l'oxygène libre dans ledit conduit et relié à l'asservissement de moteurs commandant des volets d'admission d'air comburant dans la première section de l'enveloppe de l'unité de craquage. Grâce à cette disposition on mesure l'oxygène libre dans le conduit et si cet oxygène libre est insuffisant, il est admis une quantité supérieure d'air comburant afin de s'assurer que l'ensemble des vapeurs pyroligneuses et des différents constituants sont brûlés dans l'enveloppe.

Les vapeurs sèches sortant de l'unité de craquage sont à une température relativement élevée et il n'est pas obligatoire que ces vapeurs recyclées pour le séchage du bois dans les fours soient à une telle température, on peut donc prévoir sur la dérivation reliant le conduit au second collecteur une ouverture latérale dont la section de passage est réglable par un volet de manière à admettre de l'air frais ambiant et à abaisser la température desdites vapeurs sèches.

De préférence, sur la dérivation est monté un ventilateur dont l'aspiration s'ouvre dans la dérivation, tandis que le refoulement débouche dans le second collecteur.

On sait que lors de la carbonisation du bois outre les vapeurs pyroligneuses, il y a également des dégagements de goudrons et de brais, or ces goudrons et ces brais ont tendance à se solidifier dans les différents conduits et ainsi à les obturer de sorte qu'il est nécessaire de procéder régulièrement à un nettoyage de ces conduits. Dans la technique antérieure, on prévoit de brûler ces goudrons et ces brais en injectant de l'air avec un gaz inflammable ce qui complique énormément les installations et constitut une dépense d'énergie importante. L'installation, selon l'invention prévoit par un moyen simple de brûler aisément les goudrons et les brais qui peuvent se déposer dans le collecteur.

A cet effet, les conduits reliant le collecteur supérieur aux extrémités supérieures des fours comportent des ouvertures obturables par des volets. Ainsi, il suffit de fermer l'ouverture d'air comburant dans l'enveloppe de l'unité de craquage et d'ouvrir les ouvertures prévues sur les conduits reliant le collecteur supérieur aux extrémités supérieures du four, de manière que de l'air comburant étant amené par ces ouvertures la flamme s'étende dans le collecteur et ainsi brûle les goudrons et les brais.

De préférence, le collecteur supérieur s'étend au-dessus de l'enveloppe de l'unité de craquage et est légèrement incliné depuis son extrémité libre vers son extrémité raccordée à ladite enveloppe, un carter relié à ladite enveloppe ceinturant ledit collecteur supérieur. Grâce à cette caractéristique, le collecteur est maintenu à une certaine température maintenant les goudrons et les brais à l'état fluide et compte tenu de l'inclinaison dudit collecteur, ceux-ci tendent à couler vers l'enveloppe de l'unité de craquage.

De préférence, le second collecteur s'étend sous l'unité de craquage dans un plan vertical dans lequel s'étend le collecteur supérieur. Ainsi, on réalise une installation relativement compacte, ce qui permet son implantatation dans des espaces restreints.

Enfin, suivant une dernière caractéristique constructive, les conduits reliant le collecteur supérieur aux extrémités supérieures des fours comportent chacun un manchon s'étendant verticalement et dans lequel est mobile une douille reliée à l'extrémité supérieure du four, dans ledit manchon débouchant le tuyau d'évacuation des vapeurs, ladite douille comportant une ouverture latérale pour mettre en communication sélectivement le four avec le collecteur supérieur ou avec le tuyau d'évacuation. On réalise ainsi une disposition très simple et très pratique pour diriger les vapeurs pyroligneuses vers le collecteur, lorsque le four est en carbonisation ou au contraire pour évacuer les vapeurs lorsque le four est en position de séchage.

L'invention va maintenant être décrite avec plus de détails en se référant à un mode de réalisation particulier donné à titre d'exemple seulement et représenté aux dessins annexés, dans lesquels :

Figure 1 est une vue en plan de l'ensemble d'une installation, selon l'invention.

Figure 2 est une vue en plan de l'installation proprement dite.

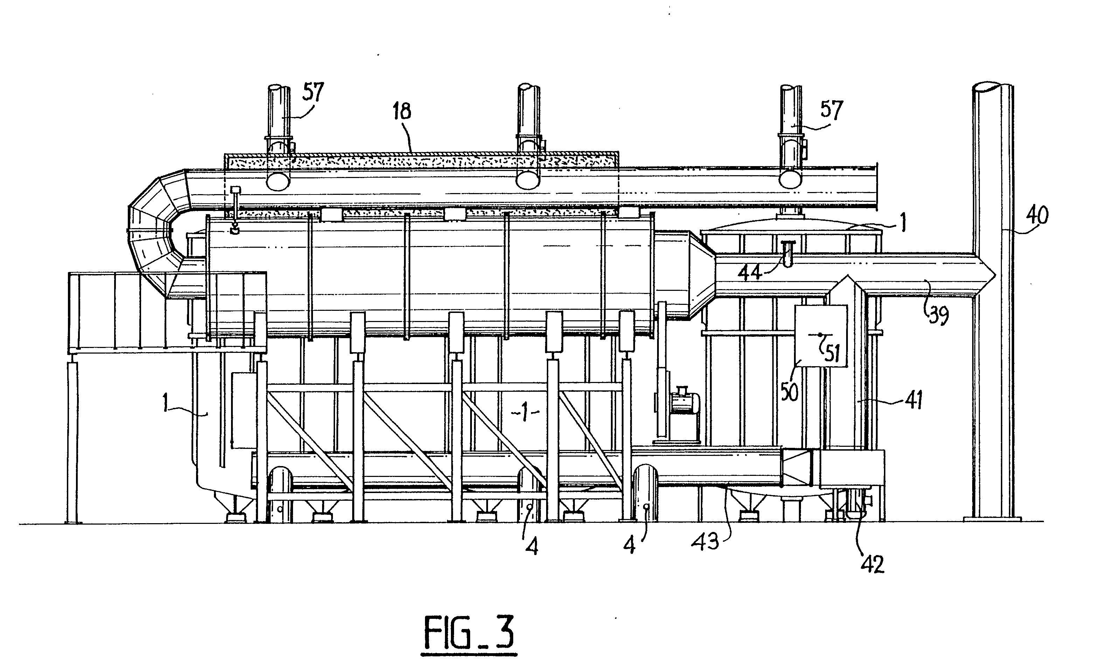

Figure 3 est une vue en élévation de côté de l'installation de la figure 2.

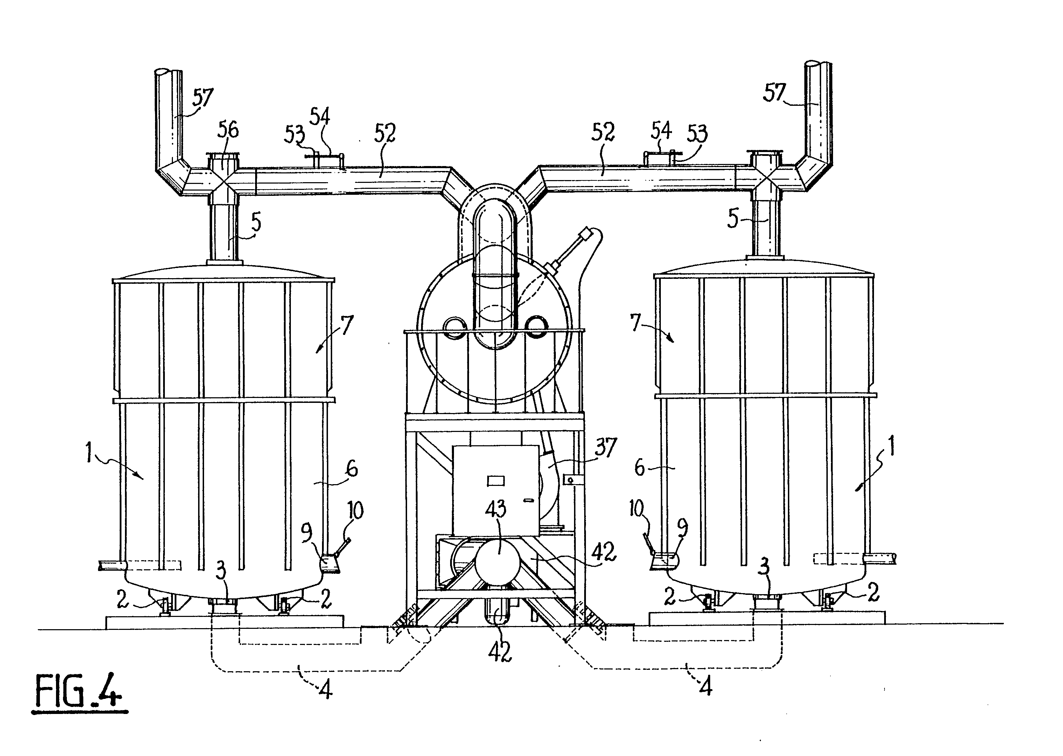

Figure 4 est une vue en élévation de face de l'installation des figures 2 et 3.

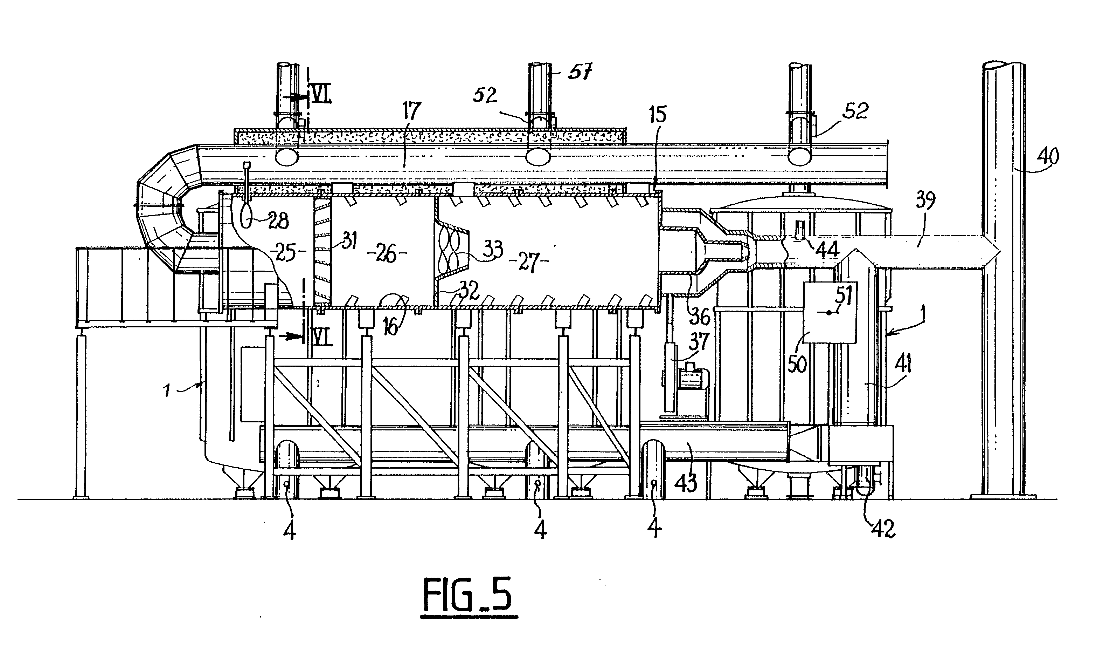

Figure 5 est une vue en coupe longitudinale de l'unité de craquage.

Figure 6 est une vue en coupe suivant la ligne VI-VI de la figure 5.

Figure 7 est une vue en perspective d'un détail.

Figure 8 est une vue en perspective d'un détail.

Figure 9 est une vue en coupe suivant la ligne IX-IX de la figure 8.

Figure 10 est une vue en élévation d'un détail.

Figure 11 montre un détail du raccordement des fours aux conduits d'arrivée de vapeurs sèches de séchage.

L'installation représentée aux figures comprend, dans le mode de réalisation représenté, six fours de carbonisation 1, ces fours étant supportés par quatre roulettes 2. Chaque four comporte à sa partie inférieure un embout 3 pour être raccordé à un conduit 4 et à sa partie supérieure une douille 5 d'évacuation des fumées.

Les fours 1 sont formés de deux parties 6 et 7 susceptibles d'être séparées afin de pouvoir procéder, d'une part, au remplissage du bois à carboniser et d'autre part, au vidage du charbon de bois obtenu après carbonisation.

La partie 6 comporte au voisinage de son extrémité inférieure des ouvertures 9 obturables par des volets 10 et destinées à permettre l'allumage du four.

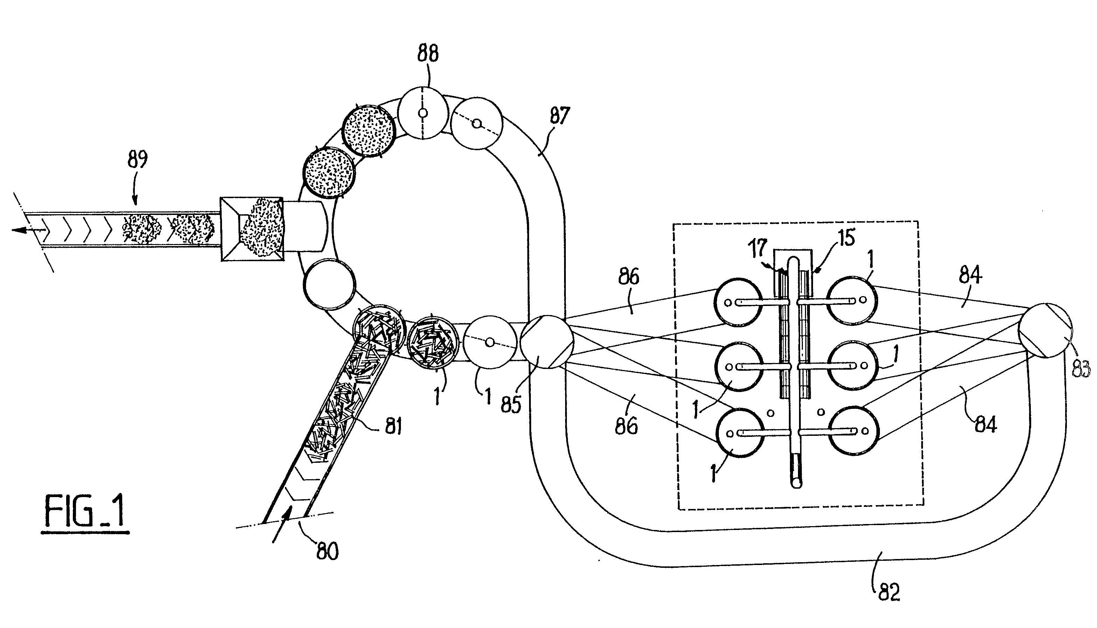

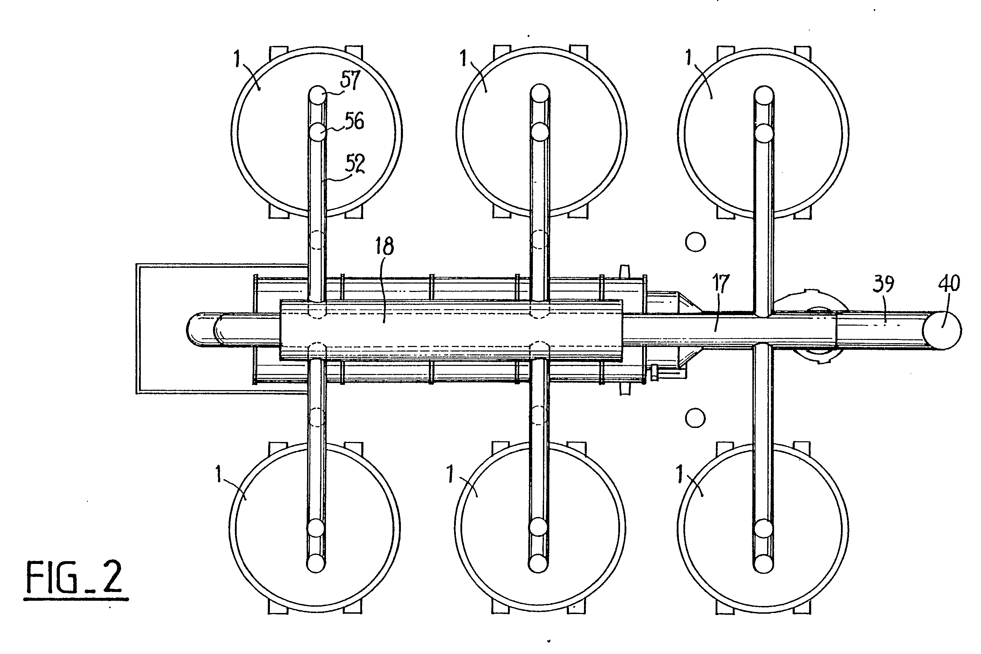

Comme on le voit sur les figures 1 et 2, les fours 1 sont disposés sur deux lignes parallèles de part et d'autre d'une unité de craquage 15.

L'unité de craquage 15 comprend une enveloppe 16 en matériau réfractaire dont une extrémité amont est reliée à un collecteur 17 qui est en partie enfermé dans un carter 18 de manière à être amené à une température de l'ordre de 160° C.

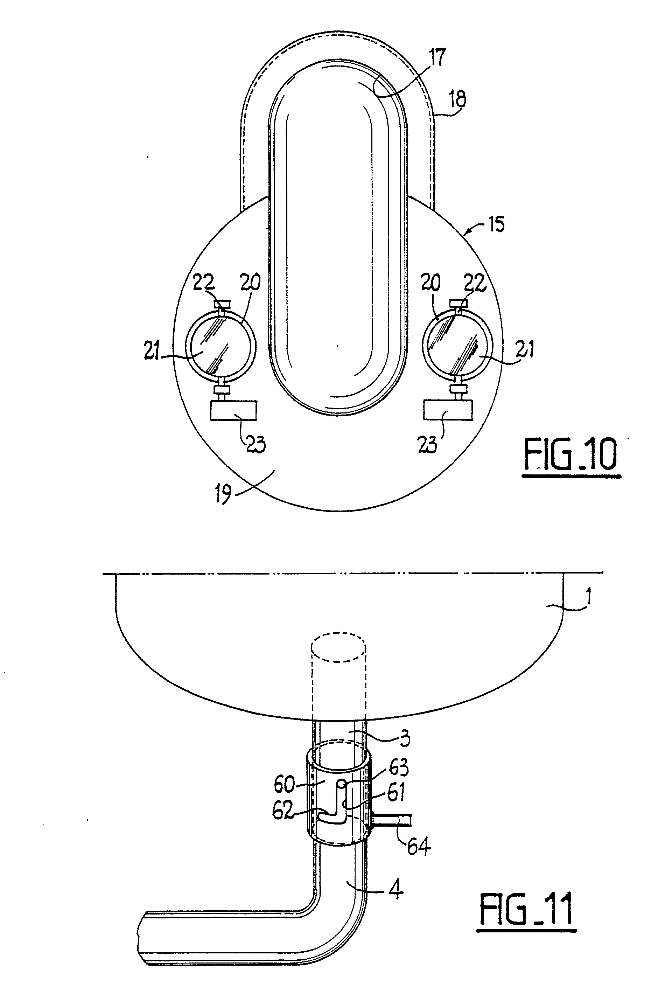

L'extrémité amont de l'enveloppe 16 est fermée par une paroi 19 présentant, de part et d'autre, du collecteur 17 deux ouvertures 20 d'admission d'air comburant, ces ouvertures étant obturables par des volets 21 articulés sur des axes 22 reliés à des moteurs 23 de commande (voir figure 10).

L'unité de craquage 15 est divisée en trois sections 25, 26 et 27. La section 25 constitue une chambre de mélange et comporte un allumeur 28 et elle est séparée de la section 26 par une paroi en nids d'abeilles 31. La section 26 est séparée de la section 27 par une paroi 32 qui présente, dans sa partie centrale un tronc de cône 33 avec un déflecteur hélicoïdal de sorte que cette section constitue une chambre de compression. Enfin, la section 27 se termine par un système de venturi avec un cône 36 relié au refoulement d'un ventilateur 37 aspirant de l'air ambiant de refroidissement, le cône 36 s'ouvrant dans un conduit 39 dont l'extrémité libre est reliée à un conduit 40.

Grâce au ventilateur 37 et à l'effet de venturi, l'ensemble des sections 25, 26 et 27 est en dépression.

Sur le conduit 39 est montée une dérivation 41 reliée à l'aspiration d'un ventilateur 42 dont le refoulement débouche dans un collecteur 43.

Sur le conduit 39 est monté une sonde 44 reliée à un analyseur de gaz qui mesure l'oxygène libre dans ledit conduit et qui est asservi aux moteurs 23 de manière que si le flux parcourant le conduit 39 manque d'oxygène libre, les volets 21 s'ouvrent pour admettre plus d'air comburant afin d'être assuré que toutes les vapeurs pyroligneuses issues de la carbonisation soient brûlées.

L'unité de craquage 15 constitue un thermo épurateur qui permet de brûler par étage les différentes molécules des produits entrant dans les vapeurs pyroligneuses, les vapeurs sèches traversant le conduit 19 étant propres c'est-à-dire exemptes d'acides, de cétones et d'hydrocarbures.

Sur la dérivation 41, il est prévu une ouverture 50 dont la section peut être modifiée par un volet mobile 51.

Le collecteur 17 est légèrement incliné depuis son extrémité libre vers l'unité 15 et comporte six conduits latéraux 52 destinés à être chacun reliés au manchon d'évacuation des fumées des fours. Chaque conduit 52 comporte une ouverture 53 obturable par un volet 54.

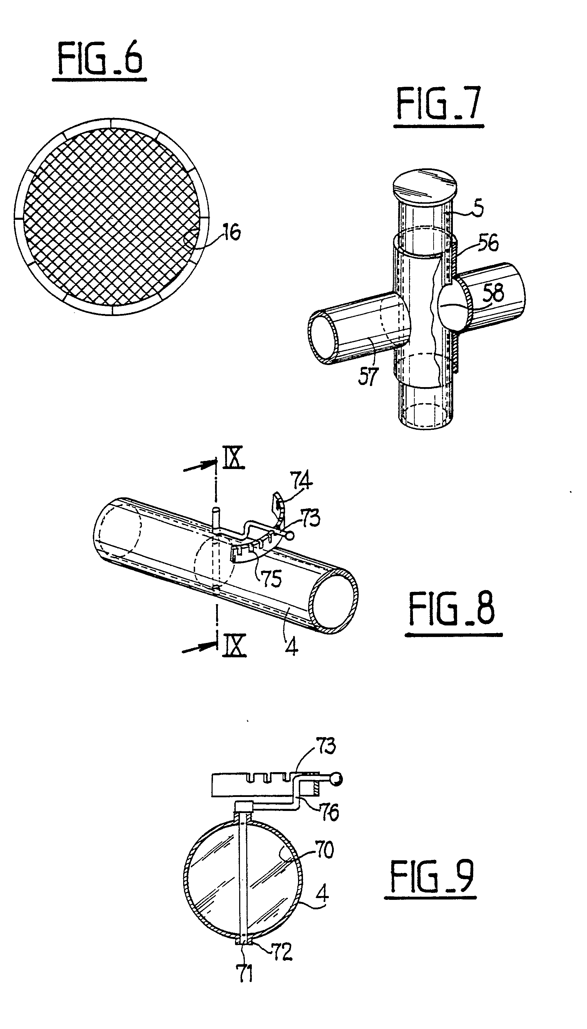

Chaque conduit 52 est solidaire d'une manchon 56 (voir figure 7) dans lequel peut coulisser et être déplacée angulairement la douille d'évacuation des fumées 5, ledit manchon étant prolongé par un tuyau 57 d'évacuation des vapeurs d'eau et la douille 5 comportant en un point intermédiaire de sa longueur un trou latéral 58 de manière que dans une position angulaire le four 1 soit en communication avec le conduit 52 et que, dans la position angulaire opposée, ledit four soit en communication directement avec le tuyau 57.

Le second collecteur 43 est solidaire de six conduits 4 qui sont destinés à être reliés aux embouts 3 par des bagues coulissantes 60 prévues sur lesdits embouts (voir figure 11). Les bagues 60 comportent une lumière 61 en forme de L avec une branche inférieure 62, ladite lumière étant traversée par un téton 63 solidaire de l'embout et la bague étant pourvue d'une barrette radiale de manoeuvre 64.

Sur chaque conduit 4, il est prévu (voir figures 8 et 9) un volet 70 monté pivotant sur un axe 71 guidé dans des paliers 72 dudit conduit 4 et solidaire extérieurement d'un levier de manoeuvre 73 mobile devant un secteur 74 avec des crans 75 avec lesquels peut coopérer sélectivement un doigt élastique 76 solidaire du levier 73 de manière à pouvoir bloquer le volet 70 dans différentes positions angulaires.

La figure 1 montre un exemple de réalisation de tout un ensemble avec une aire 80 de stockage de bois, un tapis transporteur 81 pour charger les fours 1, un circuit de rails 82 débouchant sur une plaque tournante 83 desservant des voies 84 correspondant aux différents emplacements des fours d'un côté de l'unité de craquage 15.

Le circuit comprend une seconde plaque tournante 85 desservant une série de voies 86 correspondant aux différents emplacements de fours 1 du côté libre de l'unité de craquage 15.

La plaque tournante 85 dessert également une boucle 87 constituant une aire de refroidissement 88 qui en amont du tapis 81 peut comporter une station d'ensachage 89.

On peut également prévoir sur l'aire de refroidissement des récipients de refroidissement constitués de parois métalliques minces qui facilitent l'échange de chaleur, ce qui permet de réutiliser les fours qui sont encore chauds.

L'installation fonctionne de la façon suivante:

Les fours 1 remplis sont amenés de part et d'autre de l'unité de craquage 15. Au moins deux fours 1 sont allumés, les volets 70 des conduits 4 correspondant à ces deux fours étant fermés, tandis que les volets 70 des conduits 4 des autres fours sont ouverts. Les douilles 5 des deux fours allumés sont tournées de manière à mettre en communication lesdits fours avec les conduits 52, tandis que les douilles 5 des autres fours sont tournées afin de mettre en communication ceux-ci avec les tuyaux 57 correspondants.

Les fumées, vapeurs pyroligneuses s'échappant des fours en combustion sont, grâce à la dépression engendrée par le ventilateur 37 et le système de venturi aspirées vers l'unité de craquage 15. Lors de la mise en route de l'installation l'allumeur 28 qui est un simple bec de gaz permet d'enflammer les vapeurs avec l'apport d'air comburant passant par les deux ouvertures 20 mais, dès que l'unité de craquage est montée en température le système fonctionne de lui-même sans aucun apport d'énergie supplémentaire.

Les vapeurs pyroligneuses se mélangent à l'air comburant dans la section 25 et une partie des molécules des constituants brûlent dans cette section, une autre partie des molécules des autres constituants brûlent dans les sections 26 et 27 et dans le conduit 39 on récupère des vapeurs sèches exemptes de tout élément polluant. Les vapeurs sèches sont à une température, à la sortie de l'unité 15 de l'ordre de 1000° C, l'apport d'air du ventilateur 37 permettant de ramener celle-ci à environ 400° C. Ces vapeurs sèches sont en partie reprises par la dérivation 41 avec un nouvel apport d'air de refroidissement par l'ouverture 50. Les autres vapeurs sèches qui passent par le conduit 40 constituent une source d'énergie qui peut être utilisée à différentes fins, par exemple le chauffage d'une serre, de bâtiments industriels, etc...

Les vapeurs sèches conduites par la dérivation 41 passent dans les collecteurs 43 et sont envoyées par les conduits 4 dans les autres fours 1, traversent ceux-ci pour sécher le bois qu'ils contiennent et s'échappent sous forme de vapeur d'eau à travers les douilles 5 et les tuyaux 57.

Ce système évite d'utiliser des dépoussiéreurs, le dépoussiérage s'effectuant automatiquement dans les fours en position de séchage.

La sonde 44 reliée à un analyseur de gaz permet de mesurer l'oxygène libre et de régler l'ouverture et la fermeture des volets 21 pour s'assurer ainsi que les vapeurs pyroligneuses se sont complètement consumées.

Lorsque la carbonisation est terminée dans les fours 1 correspondants, on ferme les volets 70 correspondants, puis on amène lesdits fours 1 à l'aire 88 de refroidissement, des fours remplis de bois étant mis en place aux endroits libres. On allume les fours dont le bois a été séché précédemment, et on ferme les volets 70 correspondants, tandis qu'on ouvre les volets 70 des fours 1 dont le bois doit être séché, les douilles 5 étant tournées pour lesdits fours dans la position correspondante.

Ainsi, on voit que l'installation peut fonctionner en permanence et que grâce aux volets 70, on peut isoler n'importe quel emplacement sans perturber le reste de l'installation.

Les fours prêts pour la carbonisation et ceux prêts pour le séchage peuvent être placés à n'importe quel emplacement de l'installation ce qui simplifie grandement le fonctionnement et la manutention des fours.

Une telle installation permet d'influer sur la qualité et la teneur en carbone fixe.

On sait également que dans les installations de production de charbon de bois, il y a un dégagement important de goudrons, ceux-ci relativement épais colmatant certaines gaînes. Pour remédier à cet inconvénient, généralement, on procède au brûlage des goudrons.

L'installation évite en partie le dépôt de goudrons. En effet, le collecteur 27 est logé dans le carter 18 de sorte qu'il est, grâce à la chaleur dégagée par l'unité 15, maintenu à une température favorisant le maintien à l'état fluide des goudrons qui s'écoulent vers l'unité 15.

Toutefois si néanmoins, on constate un dépôt desdits goudrons dans le collecteur 17 on brûle ceux-ci en fermant les volets 21 et en ouvrant les volets 54. En effet, de l'air comburant n'étant plus admis dans l'unité 15 le feu remonte, du fait de l'arrivée d'air comburant par les ouvertures 53, dans le collecteur 17 de sorte que les goudrons sont ainsi brûlés.

Une telle disposition est également très intéressante car elle fonctionne également très facilement sans apport d'énergie supplémentaire.

Bien entendu, l'invention n'est pas limitée au mode de réalisation qui vient d'être décrit et représenté. On pourra y apporter de nombreuses modifications de détail sans sortir pour cela du cadre de l'invention.

**Revendications**

1° - Installation de fabrication de charbon de bois du type comprenant des fours (1) avec à l'extrémité supérieure une évacuation des fumées et à l'extrémité inférieure un embout (3) destiné à être relié à des moyens de séchage du bois à carboniser caractérisée en ce qu'elle comporte deux séries de fours (1) disposées sur deux lignes parallèles, une unité de craquage (15) insérée entre les deux lignes de fours (1) et comportant un collecteur supérieur (17) présentant de part et d'autre des séries de conduits (52) destinés à être reliés chacun à la partie supérieure d'un four (1), ledit collecteur (17) débouchant dans une enveloppe (16) de ladite unité de craquage et qui est divisée en plusieurs sections de combustion (25, 26 et 27) reliées à un conduit (39) s'ouvrant sur un conduit (40) d'évacuation, sur le conduit (39) étant prévue une dérivation (41) reliée à un second collecteur (43) comportant deux séries de conduits (4) destinés à être raccordés aux embouts (3) de la partie inférieure des fours (1), des moyens (5) pour raccorder sélectivement chaque four (1) aux conduits (52) du collecteur supérieur (17) ou à un tuyau (57) d'évacuation des vapeurs, des moyens (70-73) pour ouvrir et fermer sélectivement les conduits (4) raccordant le second collecteur (43) à la partie inférieure des fours (1) des moyens (37) pour créer une circulation dans l'enveloppe, et des moyens (21) d'admission d'air comburant dans l'enveloppe (16).

2° - Installation de fabrication de charbon de bois, selon la revendication 1, caractérisée en ce que les fours (1) sont mobiles et supportés par des roulettes (2).

3° - Installation de fabrication de charbon de bois, selon la revendication 1, caractérisée en ce qu'elle comporte un circuit de rails avec une voie principale (82) desservant une aire (80) de stockage du bois à carboniser, une plaque tournante (83) pour desservir des voies (84) correspondant aux différents emplacements des fours sur une ligne, une seconde plaque tournante (85) pour desservir des voies (86) correspondant aux différents emplacements des fours sur la seconde ligne, la voie principale (88) formant une boucle fermée (87) dont les deux extrémités s'ouvrent sur la seconde plaque tournante et sur laquelle sont réparties une aire de refroidissement (88) des fours (1), une station d'ensachage (89) et l'aire (80) de stockage du bois à carboniser avec un tapis transporteur (81) destiné à remplir lesdits fours (1).

4° - Installation de fabrication de charbon de bois, selon la revendication 1, caractérisé en ce que l'unité de craquage comprend une première section (25) pourvue d'un allumeur (28) et dans laquelle arrive l'air comburant, cette section constituant une chambre de mélange et étant séparée de la section suivante (26) par une paroi ajourée (31), la section suivante (26) constituant une chambre de détente et étant raccordée à la troisième section (27) par une paroi (32) présentant une ouverture (33) en forme de tronc de cône, tandis que la troisième section est raccordée au conduit (36) un système de venturi ( 36) avec un ventilateur (37).

5° - Installation de fabrication de charbon de bois, selon les revendications 1 et 4, caractérisée en ce que le conduit (39) comporte une sonde (44) reliée à un analyseur de gaz déterminant l'oxygène libre dans ledit conduit (39) et relié à l'asservissement de moteurs (23) commandant des volets (21) d'admission d'air comburant dans la première section de l'enveloppe de l'unité de craquage.

6° - Installation de fabrication de charbon de bois, selon la revendication 1, caractérisée en ce que la dérivation (41) reliant le conduit (39) au second collecteur comprend une ouverture latérale (50) dont la section de passage est réglable par un volet (51).

7° - Installation de fabrication de charbon de bois, selon les revendications 1 et 6, caractérisée en ce que sur la dérivation (41) est monté un ventilateur (42) dont l'aspiration s'ouvre dans la dérivation, tandis que le refoulement dépouche dans le second collecteur.

8° - Installation de fabrication de charbon de bois, selon la revendication 1, caractérisée en ce que les conduits (52) reliant le collecteur supérieur aux extrémités supérieures des fours (1) comportent des ouvertures (53) obturables par des volets (54).

9° - Installation de fabrication de charbon de bois, selon la revendication 8, caractérisée en ce que le collecteur supérieur (17) s'étend au-dessus de l'enveloppe (16) de l'unité de craquage (15) et est légèrement inclinée depuis son extrémité libre vers son extrémité raccordée à ladite enveloppe (16), un carter (18) relié à ladite enveloppe (16) ceinturant ledit collecteur supérieur.

10° - Installation de fabrication de charbon de bois, selon les revendications 1 et 8, caractérisée en ce que le second collecteur (43) s'étend sous l'unité de craquage (15) dans un plan vertical dans lequel s'étend le collecteur supérieur (17).

11° - Installation de fabrication de charbon de bois, selon la revendication 1, caractérisé en ce que les conduits (52) reliant le collecteur supérieur aux extrémités supérieures des fours (1) comportent chacun un manchon (56) s'étendant verticalement et dans lequel est mobile une douille (5) reliée à l'extrémité supérieure du four (1) dans ledit manchon débouchant le tuyau d'évacuation (57) des vapeurs, ladite douille (5) comportant une ouverture latérale (58) pour mettre en communication sélectivement le four avec le collecteur supérieur (17) ou avec le tuyau d'évacuation (57).

**FIG_1**

FIG_2

EP 0 335 044 A1

FIG_3

EP 0 335 044 A1

FIG.4

EP 0 335 044 A1

FIG.5

# FIG.6

# FIG.7

# FIG.8

# FIG.9

FIG.10

FIG.11

Office européen
des brevets

**RAPPORT DE RECHERCHE EUROPEENNE**

Numero de la demande

EP  88 40 0764

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A- 599 916 (HUGON)<br>* Résumé; page 2, lignes 71-104; figures 1-5 * | 1,6-11 | C 10 B 53/02 |
| A | US-A-4 280 878 (SPRENGER)<br>* Revendications 1-10; figures 1-6 * | 1,4-11 | |
| A | FR-A- 577 471 (DEPERROIS)<br>* Résumé; figures 1,12 * | 2,3 | |
| A | FR-A-2 586 031 (SENNESAEL)<br>* Revendications 1-12; figures 1-6 * | 1,5-11 | |

| | DOMAINES TECHNIQUES RECHERCHES (Int. Cl.4) |
|---|---|
| | C 10 B |

Le présent rapport a été établi pour toutes les revendications

| Lieu de la recherche | Date d'achèvement de la recherche | Examinateur |
|---|---|---|
| LA HAYE | 11-11-1988 | MEERTENS J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P0402)